# EUROPEAN PATENT SPECIFICATION

(11) **EP 2 936 391 B1**
(45) Date of publication and mention of the grant of the patent: **25.01.2017**
(21) Application number: 13885456.7
(22) Date of filing: 18.12.2013
(51) Int. Cl.: G06K 9/22, G06K 9/00, G06K 9/24

(54) **SYSTEM, ELECTRONIC PEN AND METHOD FOR THE ACQUISITION OF THE DYNAMIC HANDWRITTEN SIGNATURE USING MOBILE DEVICES WITH CAPACITIVE TOUCHSCREEN**
SYSTEM, ELEKTRONISCHER STIFT UND VERFAHREN ZUR ERFASSUNG EINER DYNAMISCHEN HANDSCHRIFTLICHEN UNTERSCHRIFT AUF MOBILVORRICHTUNGEN MIT KAPAZITIVEM BERÜHRUNGSBILDSCHIRM
SYSTÈME, STYLO ÉLECTRONIQUE ET PROCÉDÉ D'ACQUISITION DE SIGNATURE MANUSCRITE DYNAMIQUE À L'AIDE DE DISPOSITIFS MOBILES À ÉCRAN TACTILE CAPACITIF

(30) Priority: 19.12.2012 RO 201201045
(43) Date of publication of application: 28.10.2015
(73) Proprietor: Softwin S.r.l., Bucharest (RO)
(72) Inventor: IVASCU, Bogdan-Nicusor, Slatina Judetul Olt (RO); RUSU Mircea-Sorin, Bucharest (RO)
(74) Representative: Fierascu, Cosmina-Catrinel
(86) International application number: PCT/RO2013/000027
(87) International publication number: WO 2015/020547

(56) References cited:
- WO-A1-2006/085783
- WO-A2-2011/112113
- US-A1- 2003 063 045
- CHI TSANG ET AL: "Error Reduction Techniques for a MEMS Accelerometer-based Digital Input Device", , [Online] 1 March 2008 (2008-03-01), pages 1-84, XP055164335, Internet Retrieved from the Internet: URL:http://www.ee.usyd.edu.au/people/phili p.leong/UserFiles/File/theses/cctsang08.pd f> [retrieved on 2015-01-22]

## Description

The invention describes a system, an electronic pen and a method for the acquisition and processing of the bio-kinetic information associated with the signature, in order to send this information to an authentication server for authenticity validation. The invention has applicability in behavioral biometrics, where there is users' interest in validating the expression of their will through the handwritten signature.

It is generally accepted that the procedures of validating the declared identity of a person, in addition to administrative, computerized and biometric-physiological methods and technologies, may use methods and technologies belonging to the behavioral biometrics domain, as an additional link. The acquisition and recognition of handwritten signature components is a class of behavioral biometrics.

In the prior art, various systems and methods for validation of the handwritten signature are known.

From the RO 121497 or EP 1846868 patents, a system for the acquisition of dynamic information sets - accelerations associated with the handwritten signature execution and acquired information processing methods to verify the authenticity of the signature - is known. Signatures are captured, processed and compared by a computer system, built on 3 levels. Level N1 contains one or more electronic pens equipped with inertial acceleration sensors - MEMS and USB cables, in order to obtain the bio-kinetic pattern and the context information of the signature, level N2 is composed of one or more computers (PC, laptop), which acquire the data from the electronic pens, detect the start and end times of the signature, and level N3 is represented by a server connected to a network with all the subsystems of level N2, in which he specimen signatures are stored and the authenticity of the input signatures is decided Using the electronic pens, the acquisition of the acceleration signals is done, with the inertial acceleration sensors - MEMS, integrated into the electronic pens, and the specific topology of sensor placement facilitates the acquisition of spatial kinetic information, as well as the acquisition of the contact micro-vibrations on the writing paper. The system and methods of RO 121497 or EP 1846868 treat spatial kinetic phenomenon, by processing the accelerations captured using the MEMS acceleration sensors. Using the computers on level N2 reduces the mobility and portability of the system. The pen lead must be replaced periodically.

To increase the accuracy of the handwritten signature validation system, a system according to the Romanian patent application a2009 00867/patent RO126248 or the international application PCT/RO2010/000017 may be used. Unlike the previous system, the information provided by the electronic pen is both kinetic and graphical in nature, by integrating a self-referential optical navigation sensor (ONS). Such a system, however, only works on paper or a paper-like material, with a printed pattern, limitations imposed by the ONS. Also, the pen lead must be replaced periodically. The signature graphics acquired using the ONS pen is prone to pen handling errors. For example, if the pen is held otherwise inclined than the recommended position, the acquired signature image can be slightly deformed, and this may adversely affect the recognition algorithms. The mechanism for detecting the beginning and end of the signature is based on data from micro vibrations and ONS, using data collected over a period of tens of milliseconds, on which computations are made. Thus, if the acquisition of more than one signature is desired, one must wait a period of time to avoid erroneous acquisition. As in the previous system, the portability is limited by the use of computers on level N2.

Another system in the same technical area is described in the patent application U.S. 2006 / 0139336 A1 (IBM Corporation), which provides a method to validate the identity of a user of a mobile computer, which comprises an integral pointing device (e.g. touchpad, touchscreen), capable of acquiring the user signature, performed using manually driven input means (e.g. pen, stylus), sufficiently accurate to allow signature recognition and thus user authentication. The pointing device tracks the position of the manually driven input means with which the signature is performed, as well as the pressure applied by said manually driven input means on the signing surface and provides information that will be stored for comparison and validation. Based on the position information, the velocity and acceleration of the signing instrument are subsequently computed.

Unlike the system described in the patent application U.S. 2006/0139336 A1, in which the accelerations associated with the hand movement during the signing process are derived from the signature graphics in the signing plane, the current system uses as primary information the accelerations captured by the two dedicated MEMS and the signature graphics captured by the capacitive touchscreen. This information is then used in the authentication process, pressure information is not required. In addition, the pressure sensor referred to in the patent application U.S. 2006/0139336 A1 captures only 256 levels (see paragraph [0040], line 2) which are not sufficient to achieve a high level of signature recognition. In the present invention, the MEMS capture 1024 values of the hand acceleration during the signing process. Another prior art document teaching an electronic pen with MEMS sensors is Chi Tsang et al.: "Error Reduction Techniques for a MEMS Accelerometer-based Digital Input Device", M.Sc. Thesis, Chinese Univ. of Hong Kong, March 2008.

In order to eliminate the above disadvantages, the present invention provides a system for the acquisition of a dynamic handwritten signature performed using an electronic pen on a mobile device with capacitive touchscreen, the system comprising:
a) an electronic pen (1)
b) a mobile device with capacitive touchscreen (2)

The electronic pen (1) includes a housing that allows the transmission of static electricity to the pen tip and from the pen tip to the capacitive touchscreen mobile device and is equipped with two groups of inertial acceleration sensors (MEMSA and MEMSB), the first (MEMSA) being located closer to the tip of the electronic pen and the other (MEMSB) being located at a distance d of at least 30 mm from the first group, sufficient to emphasize the spatial kinetic information of the signature, which captures kinetic information (ax, ay, bx, by) and an acquisition microcontroller (µC) which takes the information from the two groups of sensors and transmits it as it is acquired. The capacitive touchscreen mobile device (2) comprises means (such as an operating system) to capture data sets (x, y, t), where (x, y) represents the absolute graphical coordinates, expressed in pixels, of the pen tip position in contact with the capacitive touchscreen during the signing process, at time t, expressed in milliseconds.

By using this mobile device with a capacitive touchscreen, the paper with printed pattern is no longer necessary (the ONS is no longer used), because the signature is performed directly on the device.

The information captured by the electronic pen (1) and the capacitive touchscreen mobile device (2) are then processed, synchronized and stored on said capacitive touchscreen mobile device (2).

The electronic pen (1) communicates with the capacitive touchscreen mobile device (2) via a wired or wireless connection.

The electronic pen (1) must include a housing (P2) and a tip (P1) made of materials with capacitive properties that allow the transmission of static electricity. Such tip has the advantage of not requiring replacement than in case of damage. The housing (P2) can be made, for example, from metal and the tip from rubber with capacitive properties. In contact with the user's hand performing the signature, the electric charge of the human body is transmitted to the touchscreen of the mobile device through the pen housing, which is in contact with the tip and further reaching the touchscreen. In order to acquire the accelerations generated by the movement of the user's hand, two groups of MEMS inertial acceleration sensors are used, MEMSA and MEMSB; the first MEMSA (P3) is located closer to the tip of the electronic pen and the other MEMSB (P4) is placed at a distance d of at least 30 mm from the first group, and a microcontroller µC (P7) which transmits information collected from the two groups of sensors, as they are captured, to a power and communications module (P5), which, in turn, sends the data to the capacitive touchscreen mobile device (2). The two groups of inertial acceleration sensors MEMSA and MEMSB (P3 and P4), the microcontroller (P7) and the power and communication module (P5) are placed on a printed circuit board (P6).

The capacitive touchscreen mobile device can be, for example, but not limited to, a mobile smartphone or tablet with capacitive touchscreen, which give the system greater mobility and portability compared to systems that involve the use of a PC or laptop.

After the kinetic and graphical information mentioned above are acquired on the capacitive touchscreen mobile device, they are processed and synchronized as explained below.

In the first step, the time of beginning, or start, of the performing of the dynamic handwritten signature is established. The electronic pen continuously captures data from the inertial acceleration sensors, and when it receives the start command from the mentioned device (2), the acquisition microcontroller starts sending, through the power and communication module (P5), the acquired kinetic information (ax, ay, bx, by), captured from the two groups of MEMS inertial acceleration sensors.

After the start time, on the capacitive touchscreen mobile device (2), kinetic information (ax, ay, bx, by) from the electronic pen (1), as well as the graphical and temporal information (x, y, t) from the capacitive touchscreen mobile device (2) are retrieved.

At the time of termination, or stop, of the performing of the specified signature, a command is sent to the electronic pen, after which the acquisition microcontroller ceases to send the kinetic information to the device (2).

Typically, the start time is the first point of time at which the tip of the electronic pen is touching the capacitive screen. To determine the stop time, at each lifting of the electronic pen from the capacitive screen, the duration in which the pen is not in contact with the screen is measured. To this end, the device (2) may be provided with a timer. When this duration is greater than a predefined timeout, of about hundreds of milliseconds, it is considered that the signature is over and the stop time is marked.

Using this protocol for establishing the start / stop moments for the beginning and end of the signature, a more accurate detection is provided (being done instantly), because it identifies the exact moment when the pen tip touches the screen, unlike the lead and printed pattern system in which the start / stop detection is accomplished based on micro-vibrations and on data from the optical navigation sensor - ONS (for detection, it is necessary to capture data over a period of tens of milliseconds, over which computations are made). Thus, consecutive signatures may be performed without the need for a minimum waiting period between them.

Upon completion of the information acquisition, the association and synchronization of the kinetic information from the electronic pen (1) with the graphical information from the capacitive touchscreen mobile device (2) is done. The points of time for the capacitive touchscreen mobile device are determined to a fixed reference, only the differences between two events (such as pen-down, pen-drag, pen-up) being significant for synchronization.

This step can be performed on the capacitive touchscreen mobile device (2) knowing the start time (tₛₜₐᵣₜ) and end time (tₛₜₒₚ) of the signature and the time of each contact with the capacitive touchscreen, as well as the sampling rate with constant periodicity of the accelerations acquired by the electronic pen. This provides the association between each pair of accelerations (ax, ay, bx, by) transmitted by the electronic pen (1) and pairs (dx, dy) representing the relative displacement to the previous position of the tip of the pen, resulting from the graphical data (x, y) captured by the capacitive touchscreen mobile device (2). The pair of relative displacements (dx, dy) corresponding to the start time of the signature is associated to the first pair of accelerations transmitted by the electronic pen and the pair of relative displacement (dx, dy) corresponding to the stop time of the signature is associated to the pair of accelerations transmitted by the electronic pen after stop - tₛₜₐᵣₜ (milliseconds). In order to associate information received from the two sources, it is necessary to apply an oversampling procedure on the data from the device (2) in order to have pairs of data (dx, dy) at each millisecond. Thus, between two consecutive pairs of relative displacement (dx₁, dy₁) at the time t₁ and (dx₂, dy₂) at the time t₂, t₂-t₁-1 pairs of null relative displacements (0, 0) will be added.

The signature graphics acquired with such a system is more accurate than the one captured with the ONS pen and is not prone to pen handling errors (tilt / rotation).

After the synchronization step, the data can be stored on an authentication server, and subsequently used to validate the authenticity of the signature. For authentication, several signature recognition methods can be used, such as the ones from the Romanian patent application a2009 00867/patent RO126248 or the international patent application PCT/RO2010/000017, namely SRA3, SRA5, SRA7, SRA8 (SRA = Signature Recognition Algorithm), which requires as input pairs of type (ax, ay, bx, by, dx, dy), where dx and dy are the relative displacements to the previous position of the electronic pen tip on the capacitive touchscreen mobile device and ax, ay, bx, by are the kinetic information taken from the two groups of MEMS inertial acceleration sensors from the electronic pen.

An example of the invention is given, in conjunction with the figures 1-3 in which:
- Fig. 1 - Physical modules of the system
- Fig. 2 - Functional block diagram of the system
- Fig. 3 - Electronic pen schematics

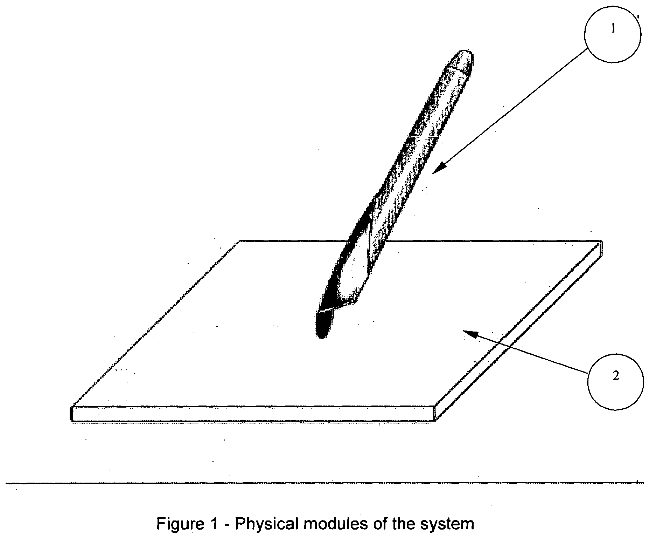

The system described in the present invention (Fig. 1) consists physically of the electronic pen module **1** that incorporates two groups of MEMS inertial acceleration sensors and a tip made of a material which capacitive properties and a capacitive touchscreen mobile device (such as a smartphone) **2**.

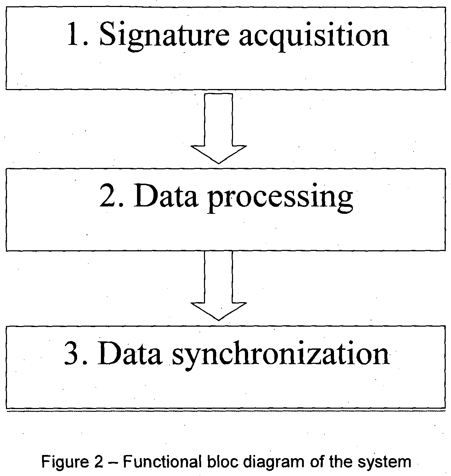

From the functional point of view (Fig. 2), the system is composed of a dynamic handwritten signature acquisition module **1**, a processing module **2** of the collected data and a synchronization module **3** of the information from the two acquisition sources (electronic pen and capacitive touchscreen mobile device).

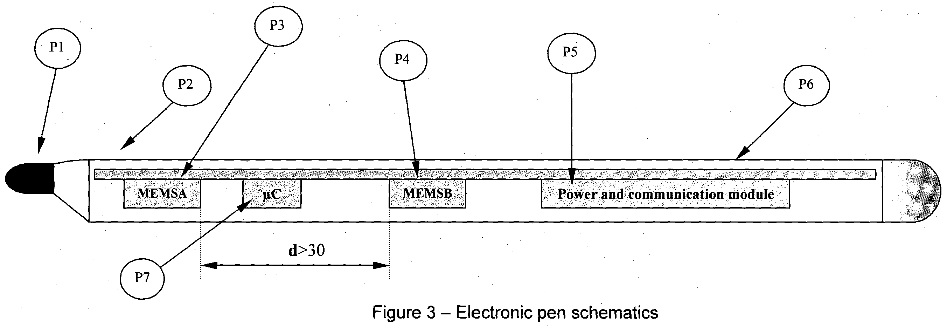

The electronic pen is shown schematically in Fig. 3. It is composed of a housing **P2** and a tip **P1** with capacitive properties. Inside the housing, two groups of MEMS inertial sensors - MEMSA (**P3**) and MEMSB (**P4**) - are positioned at a distance d of at least 30 mm, as well as a microcontroller µC (**P7**). The pen also includes a power and communication module (**P5**).

Within the dynamic handwritten signature acquisition module, the electronic pen captures the kinetic information from the two acceleration sensors with a constant sampling rate of 1 kHz, the acquisition being controlled by an acquisition microcontroller; the capacitive touchscreen mobile device captures the pairs of absolute graphical coordinates (x, y) with a variable sampling rate of at least 60 Hz. To synchronize data acquired by the electronic pen and data acquired by the capacitive touchscreen mobile device, the beginning (start) and end (stop) times of the signature are detected, representing the first and the last point of time when the tip of the electronic pen is in contact with the capacitive touchscreen. When the operating system of the capacitive touchscreen mobile device detects the signature start, it sends a command to the electronic pen, after which the acquisition microcontroller starts sending the data captured from the two groups of inertial acceleration sensors. During the signing process, on every lifting of the electronic pen from the capacitive touchscreen, a timer is started and after a predefined timeout expires, of about hundreds of, milliseconds, it is considered that the signature has ended and the capacitive touchscreen mobile device sends a command to the electronic pen, after which the acquisition microcontroller ceases to send the captured data.

Within the processing module, the absolute coordinate pairs (x, y) are converted to pairs (dx, dy) of coordinates relative to the previous position of the tip of the electronic pen on the capacitive touchscreen. Since the capacitive touchscreen mobile device acquires absolute graphical coordinate pairs (x, y) with a variable sampling rate of at least 60 Hz, and the electronic pen captures the kinetic information (ax, ay, bx, by) with a constant sampling rate of 1 KHz, in order to associate the kinetic data with the graphical data, the oversampling of the data from the capacitive touchscreen mobile device is required, in order to have pairs of data (dx, dy) at each millisecond. Thus, between two consecutive data pairs (dx₁, dy₁) at the time t₁ and (dx₂, dy₂) at the time t₂, t₂-t₁-1 pairs of null relative displacements (0, 0) will be added.

Within the synchronization module, knowing the start time (tₛₜₐᵣₜ) and stop time (tₛₜₒₚ) of the signature and the time of each contact with the capacitive touchscreen, as well as the constant sampling rate of the accelerations acquired by the electronic pen, the association between pairs of accelerations (ax, ay, bx, by) transmitted by the electronic pen and pairs of data (dx , dy) captured by the capacitive touchscreen mobile device can be achieved with an error of milliseconds. Thus, the pair of graphical coordinates (x, y) corresponding to the start time of the signature will be associated with first pair of accelerations transmitted by the electronic pen and the pair of graphical coordinate (x, y) corresponding to the stop time of the signature will be associated with the pair of accelerations transmitted by the electronic pen after tₛₜₒₚ - tₛₜₐᵣₜ milliseconds. The approximation with which the association is done is caused by the command propagation and response times of the electronic pen.

Using the system according to the invention consisting of an electronic pen connected via a USB connection to a tablet running the Android operating system, on a database of about 4500 signatures, an acceptance of original signatures of about 85%, and a rejection of forgeries of about 99% were obtained.

## Claims

1. System for the acquisition and processing of information associated with a dynamic handwritten signature,
including an electronic pen (1) with which the signature is made
and a capacitive touchscreen mobile device (2) on which the signature is made, in order to be sent to an authentication server to validate the signature authenticity,
the electronic pen (1) comprising a housing (P2) which allows the transmission of static electricity to the pen tip (P1), and being equipped with two groups of inertial acceleration sensors (MEMSA and MEMSB), the first (MEMSA) being located closer to the tip of the electronic pen and the other (MEMSB) being located at a distance d of at least 30 mm from the first group, sufficient to emphasize the spatial kinetic information of the signature, which captures the kinetic information (ax, ay, bx, by), and an acquisition microcontroller (µC) which takes the information from the two groups of sensors and transmits it as it is acquired to a power and communication module (P5),
said capacitive touchscreen mobile device (2) comprising means for capturing data sets (x, y, t), where (x, y) represents the absolute graphical coordinates, expressed in pixels, of the pen tip (P1) position in contact with the capacitive touchscreen (2) during the signing process, at time t, expressed in milliseconds,
the system being configured to process, synchronize and store on said capacitive touchscreen mobile device (2) the information captured by the electronic pen (1) and the capacitive touchscreen mobile device (2) by:
a) establishing the time of start of the dynamic handwritten signature, at which time a command is sent to the electronic pen (1), after which the acquisition microcontroller (P7) starts sending via the power and communication module (P5) the kinetic data (ax, ay, bx, by) captured from the two groups of MEMS inertial acceleration sensors to the capacitive touchscreen mobile device (2);
b) taking after the start time of the kinetic information (ax, ay, bx, by) captured by the electronic pen (1) and the graphical and temporal information (x, y, t) from the capacitive touchscreen mobile device (2), by said capacitive touchscreen mobile device (2);
c) establishing the time of stop of the mentioned dynamic handwritten signature, at which time a command is sent to the electronic pen (1), after which the acquisition microcontroller (P7) ceases to send the kinetic information to the capacitive touchscreen mobile device (2);
d) associating and synchronizing the kinetic information from the electronic pen (1) with the graphical information from the capacitive touchscreen mobile device (2).

2. System according to claim 1 wherein:
- the time of start of the dynamic handwritten signature is the first time point at which the tip of the electronic pen is in contact with the capacitive touchscreen;
- the time of stop of the dynamic handwritten signature is determined by measuring the time interval when the pen is not in contact with the capacitive touchscreen, at each lifting of the electronic pen from the capacitive touchscreen, said time of stop being the time when this interval is greater than a predefined timeout.

3. System according to claim 1 or 2 wherein, in the step of association and synchronization of the information, knowing the start time (tₛₜₐᵣₜ) and end time (tₛₜₒₚ) of the signature and the time of each contact with the capacitive touchscreen, as well as the sampling rate with constant periodicity of the accelerations acquired by the electronic pen, the association between each pair of accelerations (ax, ay, bx, by) transmitted by the electronic pen (1) and pairs (dx, dy) representing the relative displacement to the previous position of the tip of the pen, resulting from the graphical data (x, y) captured by the capacitive touchscreen mobile device (2) is made, the pair of relative displacements (dx, dy) corresponding to the start time of the signature being associated to the first pair of accelerations transmitted by the electronic pen and the pair of relative displacement (dx, dy) corresponding to the stop time of the signature being associated to the pair of accelerations transmitted by the electronic pen after tₛₜₒₚ - tₛₜₐᵣₜ (milliseconds), and between two consecutive pairs of relative displacement (dx₁, dy₁) at the time t₁ and (dx₂, dy₂) at the time t₂, t₂-t₁-1 pairs of null relative displacements (0, 0) being added.

4. System according to any of claims 1-3, **characterized in that** the electronic pen (1) communicates with the capacitive touchscreen mobile device (2) via a wired or wireless connection.

5. System according to any of preceding claims, **characterized in that** the housing (P2) and tip (P1) of the electronic pen (1) are made of materials having capacitive properties that allow the transmission of static electricity.

6. Method for the acquisition and processing of information related to a dynamic handwritten signature, in which a system according to any of claims 1 to 5 is used, comprising the following steps:
a) establishing the time of start of the dynamic handwritten signature, at which time a command is sent to the electronic pen (1), after which the acquisition microcontroller (P7) starts sending via the power and communication module (P5) the kinetic data (ax, ay, bx, by) captured from the two groups of MEMS inertial acceleration sensors to the capacitive touchscreen mobile device (2);
b) taking after the start time of the kinetic information (ax, ay, bx, by) captured by the electronic pen (1) and the graphical and temporal information (x, y, t) from the capacitive touchscreen mobile device (2), by said capacitive touchscreen mobile device (2);
c) establishing the time of stop of the mentioned dynamic handwritten signature, at which time a command is sent to the electronic pen (1), after which the acquisition microcontroller (P7) ceases to send the kinetic information to the capacitive touchscreen mobile device (2);
d) associating and synchronizing the kinetic information from the electronic pen (1) with the graphical information from the capacitive touchscreen mobile device (2).

7. Method according to claim 6 **characterized in that**
- the time of start of the dynamic handwritten signature is the first time point at which the tip of the electronic pen is in contact with the capacitive touchscreen;
- the time of stop of the dynamic handwritten signature is determined by measuring the time interval when the pen is not in contact with the capacitive touchscreen, at each lifting of the electronic pen from the capacitive touchscreen, said time of stop being the time when this interval is greater than a predefined timeout.

8. Method according to any of claims 6-7 **characterized in that**, in the step of association and synchronization of the information, knowing the start time (tₛₜₐᵣₜ) and end time (tₛₜₒₚ) of the signature and the time of each contact with the capacitive touchscreen, as well as the sampling rate with constant periodicity of the accelerations acquired by the electronic pen, the association between each pair of accelerations (ax, ay, bx, by) transmitted by the electronic pen (1) and pairs (dx, dy) representing the relative displacement to the previous position of the tip of the pen, resulting from the graphical data (x, y) captured by the capacitive touchscreen mobile device (2) is made, the pair of relative displacements (dx, dy) corresponding to the start time of the signature being associated to the first pair of accelerations transmitted by the electronic pen and the pair of relative displacement (dx, dy) corresponding to the stop time of the signature being associated to the pair of accelerations transmitted by the electronic pen after tₛₜₒₚ - tₛₜₐᵣₜ (milliseconds), and between two consecutive pairs of relative displacement (dx₁, dy₁) at the time t₁ and (dx₂, dy₂) at the time t₂, t₂-t₁-1 pairs of null relative displacements (0, 0) being added.

## Patentansprüche

1. System zur Erfassung und Verarbeitung von Informationen, die mit einer dynamischen handgeschriebenen Signatur verbunden sind,
das ein elektronisches Stift (1), mit dem die Signatur hergestellt wird, enthält sowie ein kapazitatives Touchscreen-Mobilgerät (2) auf dem die Signatur erstellt wird, um an einen Authentifizierungsserver zur Bestätigung der Signatur-Authentizität gesendet zu werden,
wobei der elektronische Stift (1) ein Gehäuse (P2) aufweist, das die Übertragung von statischer Elektrizität zu der Stiftspitze (P1) ermöglicht und mit zwei Gruppen von Inertialbeschleunigungssensoren (MEMSA und MEMSB), wobei der erste Sensor (MEMSA) näher an der Spitze des elektronischen Stifts angeordnet ist und der andere Sensor (MEMSB) in einem ausreichenden Abstand d von mindestens 30 mm von der ersten Gruppe angeordnet ist, um die räumliche kinetische Information der die kinetische Information (ax, ay, bx, by) erfassenden Signatur zu betonen, und einem Erfassungs-Mikrocontroller (µC), der die Informationen aus den beiden Gruppen von Sensoren übernimmt und sie dann die überträgt, wenn sie zu/in einem Strom- und Kommunikationsmodul (P5) erfasst wird, ausgestattet ist,
wobei das kapazitative Touchscreen-Mobilgerät (2) Mittel zum Erfassen von Datensätzen (x, y, t), wobei (x, y) die in Pixeln ausgedrückten absoluten graphischen Koordinaten darstellt, der Stiftspitzenlage (P1) in Kontakt mit dem kapazitiven Berührungsbildschirm (2) während des Signierungsvorgangs zum in Milisekunden ausgedrückten Zeitpunkt t umfasst,
wobei das System zur Verarbeitung, Synchronisierung und Speicherung der von dem elektronischen Stift (1) und dem kapazitiven Touchscreen-Mobilgerät (2) erfassten Informationen auf dem mobilen Gerät (2) des kapazitiven Touchscreens konfiguriert ist, durch:
a) Festlegen der Startzeit der dynamischen handgeschriebenen Signatur, wobei zu diesem Zeitpunkt ein Befehl an den elektronischen Stift (1) gesendet wird, wonach der Erfassungs-Mikrocontroller (P7) beginnt die kinetischen Daten (ax, ay, bx, by), die von den beiden Gruppen von MEMS Inertialbeschleunigungssensoren erfasst werden, an dem kapazitiven Touchscreen-Mobilgerät (2) über das Energie- und Kommunikationsmodul (P5) zu senden;
b) die Übernahme der Startzeit der durch den elektronischen Stift (1) erfassten kinetischen Information (ax, ay, bx, by) und der vom kapazitiven Touchscreen-Mobilgerät (2) erfassten graphischen und zeitlichen Information (x, y, t) durch das genannte kapazitive Touchscreen-Mobilgerät (2);
c) Festlegung des Zeitpunktes des Stoppens der erwähnten dynamischen handgeschriebenen Signatur, zu welchem Zeitpunkt ein Befehl an den elektronischen Stift (1) gesendet wird, wonach der Erfassungs-Mikrocontroller (P7) aufhört die kinetische Information zum kapazitiven Touchscreen-Mobilgerät (2) zu senden;
d) Zuordnen und Synchronisieren der kinetischen Information von dem elektronischen Stift (1) mit der graphischen Information von dem kapazitiven Touchscreen-Mobilgerät (2).

2. System nach Anspruch 1, **wobei**,
- die Startzeit der dynamischen handgeschriebenen Signatur der erste Zeitpunkt ist, zu dem die Spitze des elektronischen Stiftes mit dem kapazitiven Touchscreen in Kontakt steht;
- die Zeit des Stoppens der dynamischen handgeschriebenen Signatur wird bestimmt, indem das Zeitintervall gemessen wird in dem der Stift nicht in Kontakt mit dem kapazitiven Touchscreen steht, bei jedem Anheben des elektronischen Stifts vom kapazitiven Touchscreen, wobei die genannte Zeit des Stoppens stellt die Zeit dar, zu der dieses Intervall größer als ein vorbestimmtes Zeitlimit ist.

3. System nach Anspruch 1 oder 2, wobei im Schritt des Zuordnens und Synchronisierens der Information die Startzeit (tₛₜₐᵣₜ) und die Endzeit (tₛₜₒₚ) der Signatur und die Zeit jedes Kontakts mit dem kapazitiven Touchscreen, sowie die Abtastrate mit konstanter Periodizität der durch den elektronischen Stift erfassten Beschleunigungen, die Zuordnung zwischen jedem Paar von Beschleunigungen (ax, ay, bx, by), die durch den elektronischen Stift (1) übertragen werden, und Paare (dx, dy) welche die relative Verschiebung zur vorherigen Position der Stiftspitze darstellen, die aus den von dem kapazitiven Touchscreen-Mobilgerät (2) erfassten graphischen Informationen (x, y) bekannt sind, wobei das Paar der relativen Verschiebungen (dx, dy) das der Startzeit der Signatur entsprechen ist dem ersten Paar von Beschleunigungen zugeordnet, die durch den elektronischen Stift übertragen werden und das Paar der relativen Verschiebungen (dx, dy) das der Endzeit der Signatur entspricht ist dem Paar von Beschleunigungen zugeordnet, die durch den elektronischen Stift nach tₛₜₒₚ - tₛₜₐᵣₜ (Millisekunden) übertragen wird, und zwischen zwei aufeinanderfolgenden Paaren relativer Verschiebung (dx₁, dy₁) zum Zeitpunkt t₁ und (dx₂, dy₂) zum Zeitpunkt t₂, t₂-t₁-1 Paare von Null-Relativverschiebungen (0, 0) hinzugefügt sind.

4. System nach einem der Ansprüche 1 bis 3, **dadurch gekennzeichnet, dass** der elektronische Stift (1) über eine drahtgebundene oder drahtlose Verbindung mit dem kapazitiven Touschscreen-Mobilgerät (2) kommuniziert.

5. System nach einem der vorhergehenden Ansprüche, **dadurch gekennzeichnet, dass** das Gehäuse (P2) und die Spitze (P1) des elektronischen Stiftes (1) aus Materialien mit kapazitiven Eigenschaften bestehen, die die Übertragung statischer Elektrizität ermöglichen.

6. Verfahren zur Erfassung und Verarbeitung von Informationen, die sich auf eine dynamische handgeschriebene Signatur beziehen, bei der ein System nach einem der Ansprüche 1 bis 5 verwendet wird, folgende Schritte umfassend:
a) Festlegen der Startzeit der dynamischen handgeschriebenen Signatur, wobei zu diesem Zeitpunkt ein Befehl an den elektronischen Stift (1) gesendet wird, wonach der Erfassungs-Mikrocontroller (P7) beginnt, über das Energie- und Kommunikationsmodul (P5) die kinetischen Informationen (ax, ay, bx, by) die von den beiden Gruppen von MEMS-Inertialbeschleunigungssensoren zu dem kapazitiven Touchscreen-Mobilgerät (2) erfasst werden, zu senden;
b) die Übernahme der Startzeit der durch den elektronischen Stift (1) erfassten kinetischen Information (ax, ay, bx, by) und der vom kapazitiven Touchscreen-Mobilgerät (2) erfassten graphischen und zeitlichen Information (x, y, t) durch das genannte kapazitive Touchscreen-Mobilgerät (2);
c) Festlegung des Zeitpunktes des Stoppens der erwähnten dynamischen handgeschriebenen Signatur, zu welchem Zeitpunkt ein Befehl an den elektronischen Stift (1) gesendet wird, wonach der Erfassungs-Mikrocontroller (P7) aufhört die kinetischen Information zum kapazitiven Touchscreen-Mobilgerät (2) zu senden;
d) Zuordnen und Synchronisieren der kinetischen Information von dem elektronischen Stift (1) mit der graphischen Information von dem kapazitiven Touchscreen-Mobilgerät (2).

7. Verfahren nach Anspruch 6, **dadurch gekennzeichnet,**
- **dass** die Startzeit der dynamischen handgeschriebenen Signatur der erste Zeitpunkt ist, zu dem die Spitze des elektronischen Stiftes mit dem kapazitiven Touchscreen in Kontakt steht;
- **dass** die Zeit des Stoppens der dynamischen handgeschriebenen Signatur wird bestimmt, indem das Zeitintervall gemessen wird in dem der Stift nicht in Kontakt mit dem kapazitiven Touchscreen steht, bei jedem Anheben des elektronischen Stifts vom kapazitiven Touchscreen, wobei die genannte Zeit des Stoppens stellt die Zeit dar, zu der dieses Intervall größer als ein vorbestimmtes Zeitlimit ist.

8. Verfahren nach einem der Ansprüche 6 bis 7, **dadurch gekennzeichnet, dass** im Schritt des Zuordnens und Synchronisierens der Information die Startzeit (tₛₜₐᵣₜ) und die Endzeit (tₛₜₒₚ) der Signatur und die Zeit jedes Kontakts mit dem kapazitiven Touchscreen, sowie die Abtastrate mit konstanter Periodizität der durch den elektronischen Stift erfassten Beschleunigungen, die Zuordnung zwischen jedem Paar von Beschleunigungen (ax, ay, bx, by), die durch den elektronischen Stift (1) übertragen werden, und Paare (dx, dy) welche die relative Verschiebung zur vorherigen Position der Stiftspitze darstellen, die aus den von dem kapazitiven Touchscreen-Mobilgerät (2) erfassten graphischen Informationen (x, y) bekannt sind, wobei das Paar der relativen Verschiebungen (dx, dy) das der Startzeit der Signatur entsprechen ist dem ersten Paar von Beschleunigungen zugeordnet, die durch den elektronischen Stift übertragen werden und das Paar der relativen Verschiebungen (dx, dy) das der Endzeit der Signatur entspricht ist dem Paar von Beschleunigungen zugeordnet, die durch den elektronischen Stift nach tₛₜₒₚ - tₛₜₐᵣₜ (Millisekunden) übertragen wird, und zwischen zwei aufeinanderfolgenden Paaren relativer Verschiebung (dx₁, dy₁) zum Zeitpunkt t₁ und (dx₂, dy₂) zum Zeitpunkt t₂, t₂-t₁-1 Paare von Null-Relativverschiebungen (0, 0) hinzugefügt sind.

## Revendications

1. Système pour l'acquisition et le traitement d'informations associées à une signature manuscrite dynamique,
comprenant un stylo électronique (1) avec lequel la signature est réalisée et un dispositif mobile tactile capacitif (2) sur lequel est réalisée la signature, afin d'être envoyé à un serveur d'authentification pour valider l'authenticité de la signature,
le stylo électronique (1) comprenant un boîtier (P2) qui permet la transmission d'électricité statique à la pointe du stylo (P1), et étant équipé de deux groupes de capteurs d'accélération inertielle (MEMSA et MEMSB), le premier (MEMSA) étant situé plus près de la pointe du stylo électronique et l'autre (MEMSB) étant situé à une distance d d'au moins 30 mm du premier groupe, suffisante pour souligner l'information spatiale cinétique de la signature, qui capture l'information cinétique (ax, ay, bx, by), et un microcontrôleur d'acquisition (µC) qui prend les informations des deux groupes de capteurs et les transmet à mesure qu'ils sont acquis à un module de puissance et de communication (P5),
ledit dispositif mobile tactile capacitif (2) comprenant des moyens pour capturer des ensembles de données (x, y, t), où (x, y) représente les coordonnées graphiques absolues, exprimées en pixels, de la position de pointe du stylo (P1) en contact avec l'écran tactile capacitif (2) pendant le processus de signature, à l'instant t, exprimé en millisecondes,
le système étant configuré pour traiter, synchroniser et stocker sur ledit dispositif mobile tactile capacitif (2) les informations capturées par le stylo électronique (1) et le dispositif mobile tactile capacitif (2) par
a) l'établissement de temps de démarrage de la signature dynamique manuscrite, au cours de laquelle une commande est envoyée au stylo électronique (1), après quoi le microcontrôleur d'acquisition (P7) commence à envoyer via le module d'alimentation et de communication (P5) les données cinétiques (ax, ay, bx, by) capturées à partir des deux groupes de capteurs d'accélération inertiels MEMS vers le dispositif mobile tactile capacitif (2);
b) prise après le temps de démarrage de l'information cinétique (ax, ay, bx, by) capturée par le stylo électronique (1)) et l'information graphique et temporelle (x, y, t) du dispositif mobile tactile capacitif (2), par ledit dispositif mobile tactile capacitif (2);
c) l'établissement de temps d'arrêt de la signature dynamique manuscrite mentionnée, moment auquel une commande est envoyée au stylo électronique (1), après quoi le microcontrôleur d'acquisition (P7) cesse d'envoyer les informations cinétiques au dispositif mobile tactile capacitif (2);
d) l'association et la synchronisation des informations cinétiques du stylo électronique (1) avec les informations graphiques du dispositif mobile tactile capacitif (2).

2. Système selon la revendication 1, dans lequel:
- le temps de démarrage de la signature manuscrite dynamique est le premier point temporel auquel la pointe du stylo électronique est en contact avec l'écran tactile capacitif;
- le temps d'arrêt de la signature dynamique manuscrite est déterminé en mesurant l'intervalle de temps pendant lequel le stylo n'est pas en contact avec l'écran tactile capacitif, à chaque levée du stylo électronique à partir de l'écran tactile capacitif, ledit temps d'arrêt étant l'instant où cet intervalle est supérieur à un délai prédéfini.

3. Système selon la revendication 1 ou 2, dans lequel, dans l'étape d'association et de synchronisation de l'information, connaissant le temps de démarrage (tₛₜₐᵣₜ) et de fin (tₛₜₒₚ) de la signature et le temps de chaque contact avec l'écran tactile capacitif, ainsi que le taux d'échantillonnage avec périodicité constante des accélérations acquises par le stylo électronique, l'association est faite entre chaque paire des accélérations (ax, ay, bx, by) transmises par le stylo électronique (1) et des paires (dx, dy) représentant le déplacement relatif à la position précédente de la pointe du stylo resultant de l'information graphique (x, y) captee par le dispositif mobile tactile capacitif (2) faite, la paire de déplacements relatifs (dx, dy) correspondant au temps de démarrage de la signature étant associé à la première paire d'accélérations transmises par le stylo électronique et la paire de déplacements relatifs (dx, dy) correspondant au temps d'arrêt de la signature étant associé à la paire d'accélérations transmises par le stylo électronique après tₛₜₒₚ - tₛₜₐᵣₜ (millisecondes), et entre deux paires consécutives de déplacements relatifs (dx₁, dy₁) au temps t₁ et (dx₂, dy₂), au temps t₂, les paires t₂-t₁-1 des déplacements relatifs nuls (0, 0) étant ajoutées.

4. Système selon l'une quelconque des revendications 1 à 3, **caractérisé en ce que** le stylo électronique (1) communique avec le dispositif mobile capacitif (2) via une connexion filaire ou sans fil.

5. Système selon l'une quelconque des revendications précédentes, **caractérisé en ce que** le boîtier (P2) et la pointe (P1) du stylo électronique (1) sont constitués de matériaux ayant des propriétés capacitives permettant la transmission d'électricité statique.

6. Méthode d'acquisition et de traitement d'informations relatives à une signature manuscrite dynamique, dans lequel on utilise un système selon l'une quelconque des revendications 1 à 5, comprenant les étapes suivantes:
a) l'établissement de temps de démarrage de la signature manuscrite dynamique, au cours d'auquel une commande est envoyée au stylo électronique (1), après quoi le microcontrôleur d'acquisition (P7) commence à envoyer, via les modules d'alimentation et de la communication (P5), des données cinétiques (ax, ay, bx, by) capturées à partir des deux groupes de capteurs MEMS de l'accélération inertielle à l'appareil mobile à écran tactile capacitif (2);
b) prise après le temps de démarrage de l'information cinétique (ax, ay, bx, by) capturée par le stylo électronique (1) et l'information graphique et temporelle (x, y, t) du dispositif mobile tactile capacitif (2) par ledit dispositif mobile tactile capacitif (2);
c) l'établissement de temps d'arrêt de la signature manuscrite dynamique mentionnée, temps auquel une commande est envoyée au stylo électronique (1), après quoi le microcontrôleur d'acquisition (P7) cesse d'envoyer les informations cinétiques au dispositif mobile tactile capacitif (2);
d) l'association et la synchronisation de l'information cinétique du stylo électronique (1) avec l'information graphique tactile capacitif du dispositif mobile (2).

7. Méthode selon la revendication 6 **caractérisée en ce que**
- le temps de démarrage de la signature manuscrite dynamique est le premier point de temps auquel la pointe du stylo électronique est en contact avec l'écran tactile capacitif;
- le temps d'arrêt de la signature manuscrite dynamique est déterminé en mesurant l'intervalle de temps lorsque le stylo n'est pas en contact avec l'écran tactile capacitif à chaque levée du stylo électronique à partir de l'écran tactile capacitif, ledit temps d'arrêt étant le temps où cet intervalle de temps est plus grand que le délai prédéfini.

8. Méthode selon l'une quelconque des revendications 6-7 **caractérisée en ce que**, dans l'étape d'association et de synchronisation des informations, connaissant le temps de démarrage (tₛₜₐᵣₜ) et de fin (tₛₜₒₚ) de la signature et le temps de chaque contact avec l'écran tactile capacitif, ainsi que le taux d'échantillonnage avec une périodicité constante des accélérations acquises par le stylo électronique, l'association entre chaque paire d'accélérations (ax, ay, bx, by) transmises par le stylo électronique (1) et des paires (dx, dy) représentant le déplacement relatif à la position précédente de la pointe du stylo, résultant des données graphiques (x, y) capturées par le dispositif mobile tactile capacitif (2) est réalisée, la paire de déplacements relatifs (dx, dy) correspondant au temps de démarrage de la signature étant associée à la première paire d'accélérations transmises par le stylo électronique et la paire de déplacements relatifs (dx, dy) correspondant au temps d'arrêt de la signature étant associé à la paire d'accélérations transmises par le stylo électronique après tₛₜₒₚ - tₛₜₐᵣₜ (millisecondes) et entre deux paires consécutives de déplacements relatifs (dx₁, dy₁) au temps t₁ et (dx₂, dy₂) au temps t₂, t₂-t₁-1 paires de déplacements relatifs nuls (0, 0) étant ajoutés.
